# EUROPEAN PATENT APPLICATION

(11) **EP 4 738 504 A1**
(43) Date of publication of application: **06.05.2026**
(21) Application number: 24830592.2
(22) Date of filing: 19.06.2024
(51) Int. Cl.: H01M 10/0525, H01M 4/13, H01M 50/186

(54) **SECONDARY BATTERY AND ELECTRONIC DEVICE**

(30) Priority: 28.06.2023 CN 202310773706
(71) Applicant: Ningde Amperex Technology Limited, Ningde, Fujian 352100 (CN)
(72) Inventor: YAN, Dongyang, Ningde, Fujian 352100 (CN); JIANG, Nan, Ningde, Fujian 352100 (CN); ZENG, Qiao, Ningde, Fujian 352100 (CN)
(74) Representative: Kraus & Lederer PartGmbB
(86) International application number: PCT/CN2024/100143
(87) International publication number: WO 2025/001946

(57) **Abstract**

A secondary battery and an electronic device are provided. The secondary battery includes a housing, an electrode assembly disposed in the housing, and a first conductive plate. The electrode assembly is a stacked structure. The electrode assembly includes a first electrode plate, a separator, and a second electrode plate that are stacked sequentially in a first direction. The first conductive plate is connected to the first electrode plate. The first conductive plate extends out of the housing along a second direction perpendicular to the first direction. The first electrode plate includes a first outer electrode plate located at an outermost layer of the electrode assembly. When viewed in a third direction perpendicular to both the first direction and the second direction, the first outer electrode plate includes a first region and a second region connected in the second direction. When viewed in the third direction, the first region includes a first end connected to the second region and a second end disposed opposite to the first end in the second direction. The first region extends from the first end so as to deviate from the second direction, and the second end is farther away from the second electrode plate in the first direction than the first end. This application improves anti-overcharge performance.

## Description

### TECHNICAL FIELD

This application relates to the technical field of energy storage, and in particular, to a secondary battery and an electronic device containing the secondary battery.

### BACKGROUND

With popularization of consumer electronics products such as a laptop computer, a mobile phone, a handheld game console, a tablet computer, a mobile power supply, and an unmanned aerial vehicle, people are placing higher requirements on a secondary battery (such as a lithium-ion secondary battery).

However, secondary batteries may be thermally runaway when overcharged, reducing the reliability and service life of the secondary batteries.

### SUMMARY

In view of the above disadvantages, it is necessary to provide a secondary battery of improved anti-overcharge performance.

In addition, this application further provides an electronic device containing the secondary battery.

A first aspect of this application provides a secondary battery. The secondary battery includes a housing, an electrode assembly disposed in the housing, and a first conductive plate. The electrode assembly is a stacked structure. The electrode assembly includes a first electrode plate, a separator, and a second electrode plate that are stacked sequentially in a first direction. The first conductive plate is connected to the first electrode plate. The first conductive plate extends out of the housing along a second direction perpendicular to the first direction. The first electrode plate includes a first outer electrode plate. The first outer electrode plate is an outermost layer of the electrode assembly. When viewed in a third direction perpendicular to both the first direction and the second direction, the first outer electrode plate includes a first region and a second region connected in the second direction. When viewed in the third direction, the first region includes a first end connected to the second region and a second end disposed opposite to the first end in the second direction; the first region extends from the first end so as to deviate from the second direction, and the second end is farther away from the second electrode plate in the first direction than the first end.

In this application, the first region is set to extend so as to deviate from the second direction. When the secondary battery is overcharged, the first region or the second electrode plate corresponding to the first region can serve as a sacrificial position for depositing lithium first in the case of overcharge, thereby reducing the probability or degree of lithium plating at other positions. This also reduces the probability of contact shorting caused by the deposited lithium dendrites piercing the separator, thereby reducing the occurrence of thermal runaway. Furthermore, if gas is produced near the first region in the case of overcharge of the secondary battery, contact interfaces between the first outer electrode plate, the separator, and the second electrode plate that are adjacent can be burst open by the gas, thereby further reducing the probability of contact shorting caused by the lithium dendrites piercing the separator, and also facilitating timely dissipation of heat in the electrode assembly. Therefore, this application can improve the anti-overcharge performance of the secondary battery, thereby improving reliability and service life.

In some possible embodiments, when viewed in the third direction, an angle α between a line connecting the first end and the second end and the second direction satisfies: 1° ≤ α ≤ 12°. By defining the lower limit of the angle α, this application leaves lithium to be first deposited in the first region or the second electrode plate corresponding to the first region in the case of overcharge of the secondary battery, thereby reducing the probability of the deposited lithium dendrites piercing the separator and consequently causing contact shorting. By defining the upper limit of the angle α, this application reduces the impact of the first region on the energy density and appearance smoothness of the secondary battery, reduces the probability that the active material in the first region peels off easily and causes a short circuit, and reduces the probability of an increase in the active material that is not capacity-boosting in the first region.

In some possible embodiments, the angle satisfies: 3° ≤ α ≤ 10°, thereby further allowing lithium to be deposited first in the first region or the second electrode corresponding to the first region in the case of overcharge of the secondary battery, and reducing the probability of the deposited lithium dendrites piercing the separator and consequently causing contact shorting. Moreover, this further reduces the impact of the first region on the energy density and appearance smoothness of the secondary battery, reduces the probability that the active material in the first region peels off easily and causes a short circuit, and reduces the probability of an increase in the active material that is not capacity-boosting in the first region.

In some possible embodiments, when viewed in the third direction, a length of extension of the first region extending from the first end to the second end is a first length, a length of the second region in the second direction is a second length, and a ratio of the second length to the first length is greater than or equal to 7 and less than or equal to 29. By defining the lower limit of L₂/L₁, this application reduces the impact of the first region on the energy density and appearance smoothness of the secondary battery, and also reduces the probability of an increase in the active material that is not capacity-boosting in the first region. By defining the upper limit of L₂/L₁, this application reduces the probability that the occurrence or degree of lithium plating at other positions fails to be reduced significantly in the case of overcharge.

In some possible embodiments, a ratio of the second length to the first length is greater than or equal to 11 and less than or equal to 19, thereby further reducing the impact of the first region on the energy density and appearance smoothness of the secondary battery, further reducing the probability of an increase in the active material that is not capacity-boosting in the first region, and further reducing the probability that the occurrence or degree of lithium plating at other positions fails to be reduced significantly in the case of overcharge.

In some possible embodiments, in the second direction, the first region is farther away from the first conductive plate than the second region, thereby reducing the probability of contact shorting caused by entry of the first tab connected to the first conductive plate into a space between the first region and the second electrode plate adjacent to the first outer electrode plate when the electrode assembly moves in the housing along the second direction.

In some possible embodiments, in the second direction, the first region is closer to the first conductive plate than the second region. Therefore, in the case of overcharge of the secondary battery, it is convenient to release the gas generated near the first region into the space, configured to accommodate the first conductive plate and the first tab connected to the first conductive plate, in the housing, thereby reducing the probability that excessive gas is accumulated and causes the first region to further deviate from the second direction.

In some possible embodiments, the first direction includes a first side oriented from the second electrode plate toward the first outer electrode plate. The housing is a packaging bag and includes a main portion for accommodating the electrode assembly and a sealing portion connected to the main portion. The first conductive plate extends out of the housing from the sealing portion. The main portion includes a first end face connected to the sealing portion. When viewed in the third direction, the first end face extends from the sealing portion to the first side. When viewed in the third direction, the first region extends from the first end to the first side. Therefore, the first region of the first outer electrode plate is at least partially located in a housing recess formed by the extension of the first end face to the first side, thereby reducing the friction between the housing and the first outer electrode plate when the housing is covered and closed from the other side, and consequently reducing the probability of deformation of the first outer electrode plate under friction.

In some possible embodiments, the first direction further includes a second side opposite to the first side. The housing is a packaging bag and includes a main portion for accommodating the electrode assembly and a sealing portion connected to the main portion. The first conductive plate extends out of the housing from the sealing portion. The main portion includes a first end face connected to the sealing portion. When viewed in the third direction, the first end face includes a first part extending from the sealing portion to the first side and a second part extending from the sealing portion to the second side. A length of the first part in the first direction is greater than a length of the second part in the first direction. When viewed in the third direction, the first region extends from the first end to the first side. Therefore, the first region of the first outer electrode plate is at least partially located in the housing recess formed by the extension of the first part to the first side, thereby reducing the friction between the housing and the first outer electrode plate when the housing is covered and closed from the other side, and consequently reducing the probability of deformation of the first outer electrode plate under friction.

In some possible embodiments, the housing is a packaging bag and includes a main portion for accommodating the electrode assembly and a sealing portion connected to the main portion. The first conductive plate includes a first conductive region and a second conductive region connected to each other. The first conductive region is disposed inside the sealing portion and extends out of the housing from the sealing portion. The second conductive region is electrically connected to the first electrode plate. The second conductive region includes a first end portion connected to the first conductive region. The second conductive region extends from the first end portion to the first side, thereby reducing the friction between the housing and the first outer electrode plate when the housing is covered and closed, and consequently reducing the probability of deformation of the first outer electrode plate under friction.

In some possible embodiments, the first outer electrode plate includes a first current collector and a first active material layer stacked in the first direction. The first current collector includes a first surface facing the second electrode plate and a second surface opposite to the first surface. The first active material layer is disposed on the first surface, and the second surface is coated with no active material. This reduces waste of energy density.

In some possible embodiments, the first electrode plate further includes a first inner electrode plate. The first inner electrode plate is located on an inner side of the first outer electrode plate. The first inner electrode plate includes a second current collector. In the first direction, a thickness of the first current collector is a first thickness, a thickness of the second current collector is a second thickness, and a ratio of the first thickness to the second thickness is greater than or equal to 1.2 and less than or equal to 2.5. Therefore, the first outer electrode plate located on the outermost layer is of relatively high strength, thereby being able to form a protection layer, and reducing the probability of damage to the electrode assembly in the case of mechanical abuse. At the same time, the first thickness being greater than the second thickness is conducive to reducing the probability that the first current collector curls or warps due to inconsistent tension on two opposite sides of the first current collector coated on just a single side. By defining the upper limit of h₁/h₂, this application also reduces the impact of excessive h₁ on the energy density.

In some possible embodiments, the secondary battery further includes a first layer disposed on the second surface. The first layer contains an insulation material. The first layer is configured to dissipate heat generated at the first outer electrode plate in the case of overcharge of the secondary battery, thereby reducing the temperature of the electrode assembly and improving the anti-overcharge performance of the secondary battery.

In some possible embodiments, in the first direction, it is defined that a thickness of the first current collector is a first thickness and a thickness of the first layer is a third thickness. The third thickness is less than twice the first thickness. This reduces the impact of the first layer on the energy density of the secondary battery when the third thickness is excessively large, and also reduces the probability that the heat dissipation effect of the first layer is reduced and the first layer is prone to be pierced by edge burrs of the first current collector when the third thickness is excessively small.

In some possible embodiments, the first layer is bonded to the second surface and the housing. Therefore, the first layer can also transfer the heat, which is generated at the first outer electrode plate in the case of overcharge of the secondary battery, onto the housing, allow such heat to be dissipated to the outside through the housing, and improve the heat dissipation effect, thereby further improving the anti-overcharge performance of the secondary battery.

In some possible embodiments, the first outer electrode plate includes a first active material layer, a first current collector, and a second active material layer stacked in the first direction. The first current collector includes a first surface facing the second electrode plate and a second surface opposite to the first surface. The first active material layer is disposed on the first surface, and the second active material layer is disposed on the second surface.

In some possible embodiments, the first electrode plate is a positive electrode plate, and a mass of an active material disposed on the first current collector per unit area is G, satisfying: G ≤ 23 mg/cm². This reduces the probability of peel-off of the active material in the first region and makes the first region easily bendable (extensible so as to deviate from the second direction) during preparation. Furthermore, by defining an upper limit of the ratio of the first thickness to the second thickness, this application reduces the probability of the first thickness being excessively large, thereby also making the first region easily bendable during preparation.

In some possible embodiments, a separator adjacent to the first outer electrode plate is bonded to the second region, thereby further reducing the probability of contact shorting between the first outer electrode plate and the adjacent second electrode plate.

In some possible embodiments, a second electrode plate adjacent to the first outer electrode plate includes a third region and a fourth region connected in the second direction. When viewed in the first direction, the first region and the third region overlap, and the second region and the fourth region overlap. The separator adjacent to the first outer electrode plate is further bonded to the third region, thereby further reducing the probability of contact shorting between the first outer electrode plate and the adjacent second electrode plate.

In some possible embodiments, the third region includes a first subregion and a second subregion connected in the second direction. When viewed in the third direction, the second subregion includes a third end connected to the first subregion. The first subregion overlaps the first region in the first direction. When viewed in the first direction, the second subregion extends from the third end past the first region. When viewed in the third direction, the second subregion extends from the third end along a direction facing away from the first outer electrode plate. By defining that the second subregion extends along the direction facing away from the first outer electrode plate, the degree of deviation of the first region can be reduced, thereby reducing the impact of the first region on the energy density and appearance smoothness of the secondary battery, reducing the probability that the active material in the first region peels off easily and causes a short circuit, and reducing the probability of an increase in the active material that is not capacity-boosting in the first region.

In some possible embodiments, when viewed in the second direction, the separator includes a plurality of main sections stacked in the first direction and a plurality of connecting sections that connect ends of two adjacent main sections. Each of the main sections is disposed between the first electrode plate and the second electrode plate that are adjacent to each other. Due to the connecting sections disposed, the separator can exert a constraining effect on at least a part of the first electrode plate and at least a part of the second electrode plate, thereby reducing the probability of excessive bulging and breakage of the first electrode plate and the second electrode plate under the action of high-temperature gas in the case of overcharge of the secondary battery.

A second aspect of this application further provides an electronic device. The electronic device includes the secondary battery disclosed above. The electronic device is powered by the secondary battery, and the secondary battery exhibits relatively high anti-overcharge performance, thereby improving reliability and service life.

### BRIEF DESCRIPTION OF DRAWINGS

The above and/or additional aspects and advantages of this application will become evident and easily comprehensible through the description of some embodiments with reference with the drawings outlined below:
FIG. 1 is a schematic structural diagram of a secondary battery viewed in a first direction according to an embodiment of this application;
FIG. 2 is a cross-sectional view of the secondary battery shown in FIG. 1 sectioned along an II-II line according to some embodiments;
FIG. 3 is a cross-sectional view of the secondary battery shown in FIG. 1 sectioned along an III-III line according to some embodiments;
FIG. 4 is a close-up view of a part A of the secondary battery shown in FIG. 3;
FIG. 5 is a cross-sectional view of the secondary battery shown in FIG. 1 sectioned along an IV-IV line according to some embodiments;
FIG. 6 is a cross-sectional view of the secondary battery shown in FIG. 1 sectioned along an II-II line according to other embodiments;
FIG. 7 is a schematic structural diagram of the secondary battery shown in FIG. 1 prior to packaging according to some embodiments;
FIG. 8 is a cross-sectional view of the secondary battery shown in FIG. 1 sectioned along an III-III line according to other embodiments;
FIG. 9 is a schematic structural diagram of the secondary battery shown in FIG. 1 prior to packaging according to other embodiments;
FIG. 10 is a cross-sectional view of a first housing of the secondary battery shown in FIG. 7 or FIG. 9;
FIG. 11 is a cross-sectional view of a second housing of the secondary battery shown in FIG. 7 or FIG. 9;
FIG. 12 is a cross-sectional view of the secondary battery shown in FIG. 1 sectioned along an III-III line according to other embodiments;
FIG. 13 is a cross-sectional view of the secondary battery shown in FIG. 1 sectioned along an III-III line according to other embodiments;
FIG. 14 is a close-up view of a secondary battery according to other embodiments;
FIG. 15 is a cross-sectional view of a separator of the secondary battery shown in FIG. 14;
FIG. 16 is a close-up view of a secondary battery according to other embodiments;
FIG. 17 is a cross-sectional view of a secondary battery according to another embodiment of this application;
FIG. 18 is a cross-sectional view of a secondary battery according to another embodiment of this application; and
FIG. 19 is a schematic structural diagram of an electronic device according to an embodiment of this application.

This application is further described below with reference to the following specific embodiments and the foregoing drawings.

### DETAILED DESCRIPTION

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes the embodiments of this application in detail. However, this application may be embodied in many different forms, and is in no way construed as being limited to the illustrative embodiments described herein. Rather, the illustrative embodiments are provided in order to impart this application thoroughly in detail to those skilled in the art.

In addition, for brevity and clarity, the size or thickness of various components and layers in the drawings may be scaled up. Throughout the text, the same reference numerical means the same element. As used herein, the term "and/or" includes any and all combinations of one or more related items enumerated by the term. In addition, understandably, when an element A is referred to as "connecting" an element B, the element A may be directly connected to the element B, or an intermediate element C may exist through which the element A and the element B can be connected to each other indirectly.

Further, the term "may" used in describing an embodiment of this application indicates "one or more embodiments of this application".

The technical terms used herein is intended to describe specific embodiments but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

Space-related terms, such as "on", may be used herein for ease of describing the relationship between one element or feature and other element (elements) or feature (features) as illustrated in the drawings. Understandably, the space-related terms are intended to include different directions of a device or apparatus in use or operation in addition to the directions illustrated in the drawings. For example, if a device in the drawing is turned over, an element described as "above" or "on" another element or feature will be oriented "under" or "below" the other element or feature. Therefore, the illustrative term "on" includes both an up direction and a down direction. Understandably, although the terms such as first, second, third may be used herein to describe various elements, components, regions, layers and/or parts, such elements, components, regions, layers and/or parts are not limited by the terms. Such terms are intended to distinguish one element, component, region, layer or part from another element, component, region, layer, or part. Therefore, a first element, a first component, a first region, a first layer, or a first part mentioned below may be referred to as a second element, a second component, a second region, a second layer, or a second part, without departing from the teachings of the illustrative embodiments.

In this application, the greater-than, less-than, or not-equal-to design relationships between parameter values allow for a reasonable tolerance of the measuring instrument.

When a secondary battery is overcharged, a positive electrode material deintercalates lithium ions excessively, causing the charge voltage to exceed a charge cut-off voltage. On the one hand, a positive electrode material and an electrolyte solution are prone to undergo redox reactions at high voltage, generating a large amount of heat and causing the secondary battery to be thermally runaway. At the same time, the occurrence of side reactions also results in release of a large amount of oxygen and other flammable gases, causing a housing to swell and aggravating thermal runaway. On the other hand, the excess lithium ions deintercalated may accumulate on the surface of a negative electrode plate, and give rise to precipitation of lithium dendrites. The lithium dendrites may pierce a separator to cause contact shorting between a positive electrode plate and the negative electrode plate, thereby further accelerating heat generation. However, overcharge of the secondary battery reduces the reliability and service life of the secondary battery.

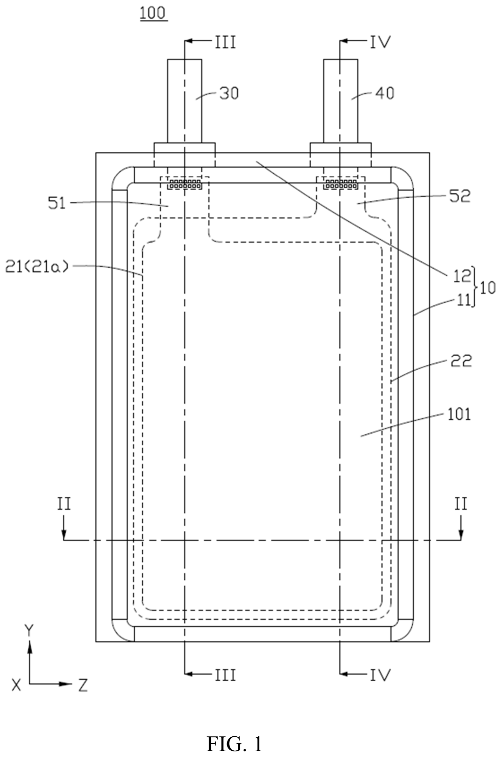

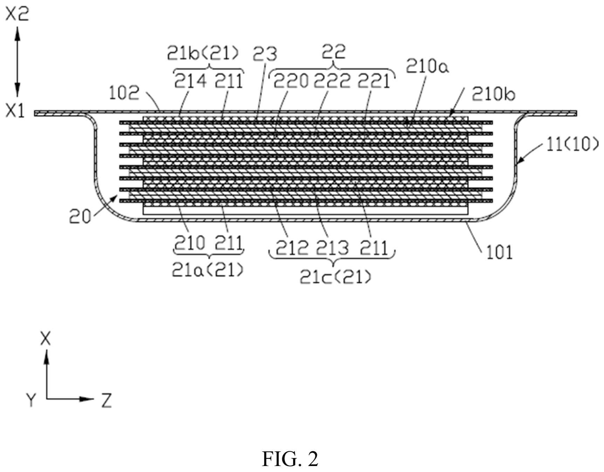

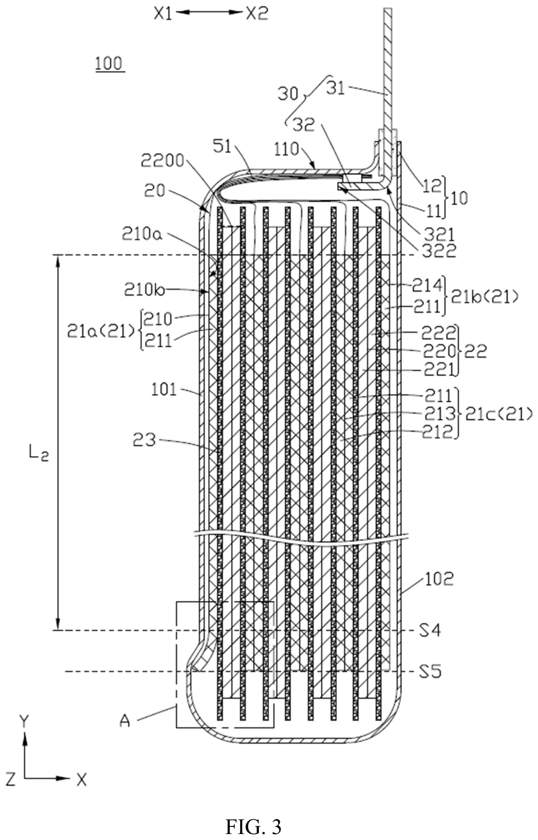

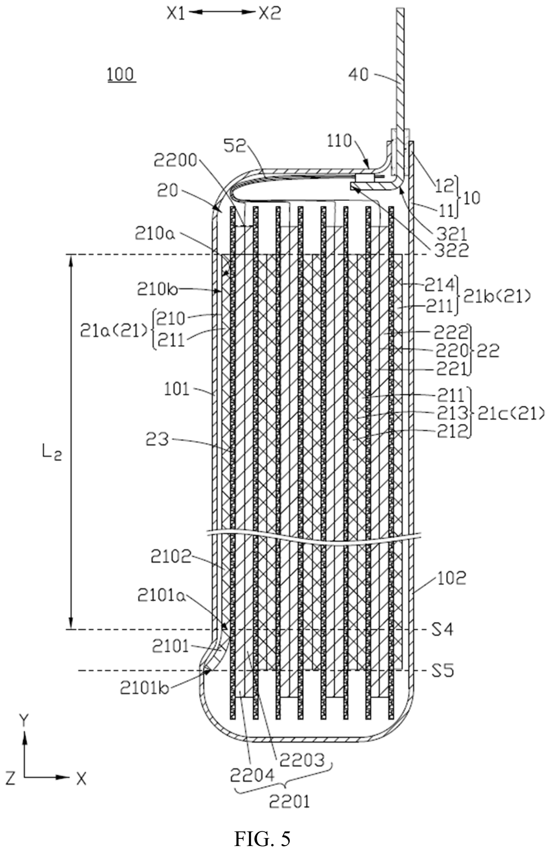

Referring to FIG. 1 to FIG. 5, an embodiment of this application provides a secondary battery 100, including a housing 10, an electrode assembly 20 and an electrolyte solution (not shown in the figure) located in the housing 10, a first conductive plate 30, and a second conductive plate 40. As shown in FIG. 2 and FIG. 3, the electrode assembly 20 is a stacked structure, and includes a plurality of first electrode plates 21, a plurality of second electrode plates 22, and a plurality of separators 23. In the stacked structure, the first electrode plates 21 and the second electrode plates 22 are stacked alternately in turn. One second electrode plate 22 is disposed between every two adjacent first electrode plates 21, and one first electrode plate 21 is disposed between every two adjacent second electrode plates 22. A separator 23 is disposed between a first electrode plate 21 and a second electrode plate 22 that are adjacent to each other. The separator 23 is configured to prevent direct contact between the first electrode plate 21 and the second electrode plate 22, thereby reducing the probability of contact shorting between the first electrode plate 21 and the second electrode plate 22. As shown in FIG. 1 and FIG. 3, the first conductive plate 30 is electrically connected to the first electrode plate 21. As shown in FIG. 1 and FIG. 5, the second conductive plate 40 is electrically connected to the second electrode plate 22. Both the first conductive plate 30 and the second conductive plate 40 extend out from one end of the housing 10. The first conductive plate 30 and the second conductive plate 40 are configured to be connected to an external device (not shown in the figures).

A three-dimensional coordinate system is established based on the mutually perpendicular first direction X, second direction Y, and third direction Z. In the description of an embodiment of this application, the first direction X is a stacking direction of the first electrode plate 21, the separator 23, and the second electrode plate 22. As shown in FIG. 2 and FIG. 3, the first direction X includes a first side X1 and a second side X2 opposite to the first side X1. The second direction Y is a direction in which the first conductive plate 30 or the second conductive plate 40 extends out of the housing 10, and is also a direction in which the first conductive plate 30 or the second conductive plate 40 protrudes from the electrode assembly 20. The third direction Z is a direction leading from the second conductive plate 40 to the first conductive plate 30.

As shown in FIG. 2 and FIG. 3, it is defined that the outermost-layer electrode plates among the plurality of first electrode plates 21 are a first outer electrode plate 21a and a second outer electrode plate 21b respectively, and an inner-layer electrode plate among the plurality of first electrode plates 21 is a first inner electrode plate 21c. In the first direction X, the first inner electrode plate 21c is disposed between the first outer electrode plate 21a and the second outer electrode plate 21b. The first inner electrode plate 21c is located on the inner side of the first outer electrode plate 21a. In the first direction X, the second electrode plate 22 and the separator 23 may be both located between the first outer electrode plate 21a and the second outer electrode plate 21b instead. The first outer electrode plate 21a and the second outer electrode plate 21b are located at the outermost layer of the electrode assembly 20. The first side X1 is a direction leading from the second electrode plate 22 toward the first outer electrode plate 21a, or a direction leading from the second outer electrode plate 21b toward the first outer electrode plate 21a. The second side X2 is a direction leading from the first outer electrode plate 21a toward the second electrode plate 22, or a direction leading from the first outer electrode plate 21a toward the second outer electrode plate 21b.

In some embodiments, the first outer electrode plate 21a and the second outer electrode plate 21b each are single-side coated electrode plates. The first outer electrode plate 21a includes a first current collector 210 and a first active material layer 211 stacked in the first direction X. The first current collector 210 includes a first surface 210a facing the second electrode plate 22 and a second surface 210b opposite to the first surface 210a. The first active material layer 211 is disposed on the first surface 210a, and the second surface 210b is coated with no active material. The first inner electrode plate 21c is a double-side coated electrode plate. The first inner electrode plate 21c includes a first active material layer 211, a second current collector 213, and a second active material layer 212 stacked in the first direction X. The second outer electrode plate 21b includes a fourth current collector 214 and a first active material layer 211 stacked in the first direction X. The first active material layer 211 of the second outer electrode plate 21b is disposed on a surface of the fourth current collector 214, the surface facing the second electrode plate 22. The first electrode plate 21 may be a positive electrode plate. Correspondingly, the first current collector 210, the second current collector 213, and the fourth current collector 214 may all be positive current collectors, and the first active material layer 211 and the second active material layer 212 may both be positive active material layers. The active material contained in the first active material layer 211 of the second outer electrode plate 21b may be the same as, or different from, the active material contained in the first active material layer 211 of the first outer electrode plate 21a. The active material contained in the first active material layer 211 or the second active material layer 212 of the first inner electrode plate 21c may be the same as, or different from, the active material contained in the first active material layer 211 of the first outer electrode plate 21a. The first outer electrode plate 21a and the second outer electrode plate 21b each are set to be single-side coated electrode plates, thereby reducing waste of energy density. When the first electrode plate 21 is a positive electrode plate, this configuration also reduces the probability that excess lithium ions accumulate and cause lithium plating due to failure of intercalation of corresponding lithium ions (for example, when the second surface 210b is coated with an active material, the lithium ions deintercalated from this active material) in the second electrode plate 22.

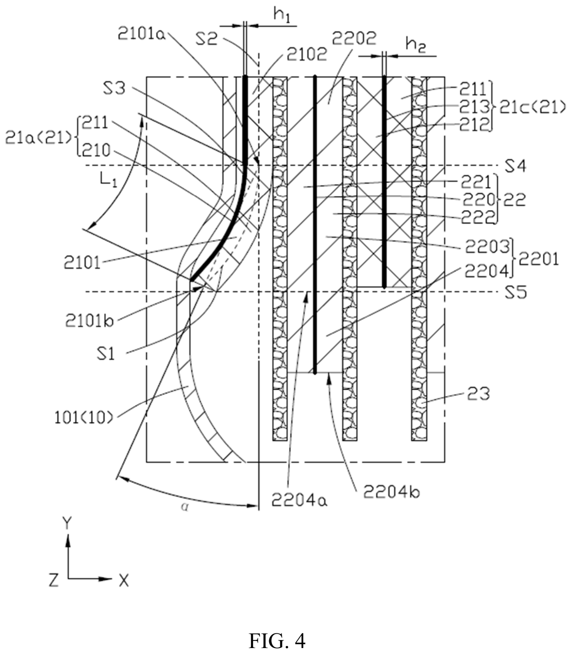

Still referring to FIG. 4, in some embodiments, in the first direction X, the thickness of the first current collector 210 is a first thickness h₁, and the thickness of the second current collector 213 is a second thickness h₂, satisfying: 1.2 ≤ h₁/h₂ ≤ 2.5. By defining the lower limit of h₁/h₂, the thickness h₁ of the first current collector 210 is relatively large. Therefore, the first outer electrode plate 21a on the outermost layer is of relatively high strength, thereby forming a protection layer, reducing the probability of damage to the electrode assembly 20 in the case of mechanical abuse (such as crush and nail penetration), and consequently improving the resistance of the electrode assembly 20 to mechanical impact. In addition, the thickness h₁ of the first current collector 210 is greater than the thickness h₂ of the second current collector 213, thereby also reducing the probability that the first current collector 210 curls or warps due to uneven tension on two opposite sides of the single-side coated first current collector 210. Moreover, by defining the upper limit of h₁/h₂, this application reduces the impact of an excessive thickness h₁ on the energy density. Furthermore, the thickness of the fourth current collector 214 of the second outer electrode plate 21b may be set to be greater than the thickness of the second current collector 213.

The second electrode plate 22 may be a double-side coated electrode plate. The second electrode plate 22 includes a third active material layer 221, a third current collector 220, and a fourth active material layer 222 that are stacked up. The third active material layer 221 is disposed toward the first active material layer 211, with the separator 23 in between. The fourth active material layer 222 is disposed toward the second active material layer 212, with the separator 23 in between. The second electrode plate 22 may be a negative electrode plate. Correspondingly, the third current collector 220 may be a negative current collector, and the third active material layer 221 and the fourth active material layer 222 may both be negative active material layers. To reduce the probability of lithium plating on the second electrode plate 22, an edge of the second electrode plate 22 in the second direction Y may extend beyond an edge of the first electrode plate 21 in the second direction Y, so that the second electrode plate 22 forms an overhang 2200 (indicated in FIG. 3). A plurality of first tabs 51 and a plurality of second tabs 52 may be disposed on the electrode assembly 20. The plurality of first tabs 51 are connected to the first current collector 210 and the second current collector 213 separately in an integral manner. The plurality of second tabs 52 are connected to the third current collector 220 separately in an integral manner. The first tabs 51 are welded to the first conductive plate 30 by a transition joint welding process, and the second tabs 52 are welded to the second conductive plate 40 by a transition joint welding process.

The positive current collector may be an aluminum foil or nickel foil, and the negative current collector may be at least one of a copper foil, a nickel foil, or a carbon-based current collector. The positive active material layer includes a positive active material. The positive active material includes a compound that enables reversible intercalation and deintercalation of lithium ions (a lithiated intercalation compound). In some embodiments, the positive active material may include lithium transition metal composite oxide. The lithium transition metal composite oxide contains lithium and at least one element selected from cobalt, manganese, or nickel. In some embodiments, the positive active material is at least one selected from lithium cobalt oxide (LiCoO₂), lithium nickel-cobalt-manganese ternary material (NCM), lithium manganese oxide (LiMn₂O₄), lithium nickel manganese oxide (LiNi_{0.5}Mn_{1.5}O₄), or lithium iron phosphate (LiFePO₄). The negative active material layer contains a negative active material, and adopts a negative active material that is known in the art and capable of reversible deintercalation of active ions, without being limited in this application. For example, the negative active material may include, but is not limited to, one of or any combination of graphite, soft carbon, hard carbon, carbon fiber, mesocarbon microbeads, silicon-based material, tin-based material, lithium titanium oxide, or other metals that can combine with lithium into an alloy. The graphite may be one of or any combination of artificial graphite, natural graphite, or modified graphite. The silicon-based material may be one of or any combination of simple-substance silicon, a silicon-oxygen compound, a silicon-carbon composite, a silicon alloy, or the like. The tin-based material may be one of or any combination of simple-substance tin, a tin-oxide compound, a tin alloy, or the like.

The separator 23 is a porous structure, and includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. The polyethylene and the polypropylene in the separator effectively reduce the probability of short-circuiting, and improve the stability of the secondary battery 100 through a shutdown effect.

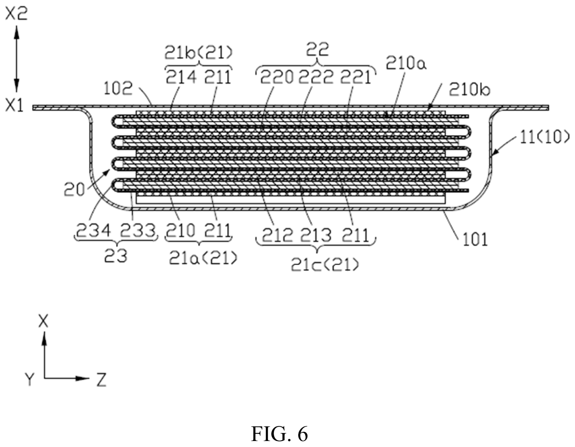

Referring to FIG. 6, in other embodiments, the electrode assembly 20 may include one separator 23 instead. The separator 23 is an integrated structure and is folded into a Z-shaped structure by bending forward and reversely alternately. The separator 23 includes a plurality of main sections 233 stacked up and a plurality of connecting sections 234 that connect the ends of two adjacent main sections 233. Each of the main sections 233 is disposed between the first electrode plate 21 and the second electrode plate 22 that are adjacent to each other. Due to the connecting sections 234 disposed, the separator 23 can exert a constraining effect on at least a part of the first electrode plate 21 and at least a part of the second electrode plate 22, thereby reducing the probability of excessive bulging and breakage of the first electrode plate 21 and the second electrode plate 22 under the action of high-temperature gas in the case of overcharge of the secondary battery 100.

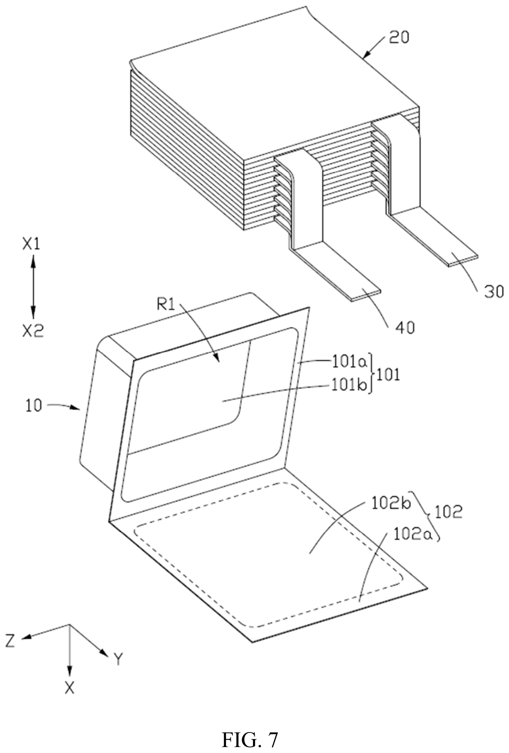

In some embodiments, the housing 10 may be a packaging bag obtained by being sealed with a sealing film, and the secondary battery 100 is a pouch battery. As shown in FIG. 1 and FIG. 3, the housing 10 includes a main portion 11 configured to accommodate the electrode assembly 20 and a sealing portion 12 connected to the main portion 11. Both the first conductive plate 30 and the second conductive plate 40 extend out of the housing 10 from the sealing portion 12. The main portion 11 includes a first end face 110 connected to the sealing portion 12. In some embodiments, when viewed in the third direction Z, the first end face 110 extends from the sealing portion 12 to the first side X1. FIG. 7 is a schematic structural diagram of a secondary battery 100 before sealing. As shown in FIG. 7, the housing 10 includes a first housing 101 and a second housing 102 that are disposed opposite to each other in the first direction X. The first housing 101 includes a first housing region 101a and a second housing region 101b that are connected to each other. Three lateral edges of the second housing region 101b are surrounded by the first housing region 101a. The second housing 102 includes a third housing region 102a and a fourth housing region 102b that are connected to each other. Three lateral edges of the fourth housing region 102b are surrounded by the third housing region 102a. The housing 10 is formed by fitting and sealing the first housing 101 and the second housing 102 together. The second housing region 101b of the first housing 101 is provided with a first recess R1, and the second housing 102 is a flat plate structure. During preparation, the electrode assembly 20 may be placed in the first recess R1 of the first housing 101, and the second housing 102 is fitted onto the first housing 101 to cover and close the housing. After the first housing 101 and the second housing 102 are fitted and sealed together, the first recess R1 is closed by the first housing region 101 and the second housing region 101b. The first housing region 101a is connected to the third housing region 102a to seal the main portion 11.

As shown in FIG. 3, in some embodiments, the first conductive plate 30 is bent as a whole. The first conductive plate 30 includes a first conductive region 31 and a second conductive region 32 connected to each other. The first conductive region 31 is disposed inside the sealing portion 12 and extends out of the housing 10 from the sealing portion 12 along the second direction Y. The second conductive region 32 is electrically connected to the first electrode plate 21 (for example, the second conductive region 32 is connected to the first electrode plate 21 by the first tab 51). The second conductive region 32 is bent relative to the first conductive region 31. The second conductive region 32 includes a first end portion 321 connected to the first conductive region 31 and a second end portion 322 disposed opposite to the first end portion 321. The second conductive region 32 extends from the first end portion 321 toward the first side X1. Therefore, when viewed in the second direction Y, the second conductive region 32 overlaps the first end face 110. The second conductive region 32 may extend along the first direction X or may be tilted relative to the first direction X.

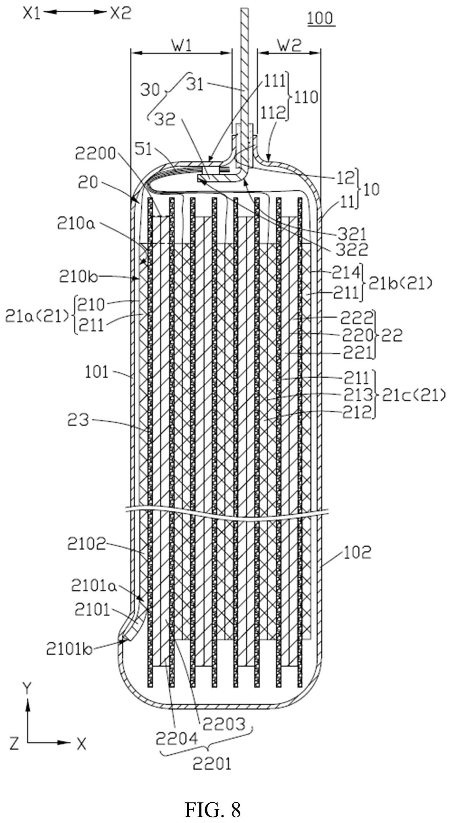

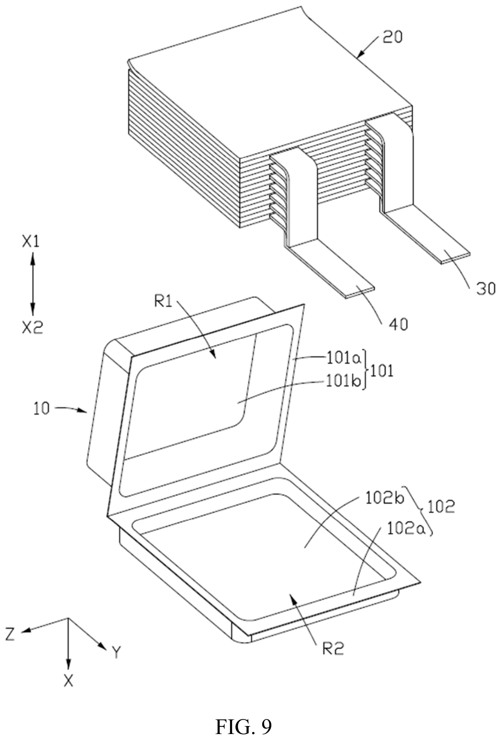

As shown in FIG. 8, in other embodiments, when viewed in the third direction Z, the first end face 110 may further include a first part 111 extending from the sealing portion 12 to the first side X1 and a second part 112 extending from the sealing portion 12 to the second side X2. The sealing portion 12 is located at a junction between the first part 111 and the second part 112 in the first direction X. A length W₁ of the first part 111 in the first direction X is less than a length W₂ of the second part 112 in the first direction X. For example, the first part 111 is a deep cavity side of the housing 10, and the second part 112 is a shallow cavity side of the housing 10. FIG. 9 is a schematic structural diagram of the secondary battery 100 before sealing. As shown in FIG. 9, in this case, the fourth housing region 102b of the second housing 102 is provided with a second recess R2 correspondingly. After the first housing 101 and the second housing 102 are fitted and sealed together, the second housing region 101b and the fourth housing region 102b combine into a main portion 11 configured to accommodate the electrode assembly 20.

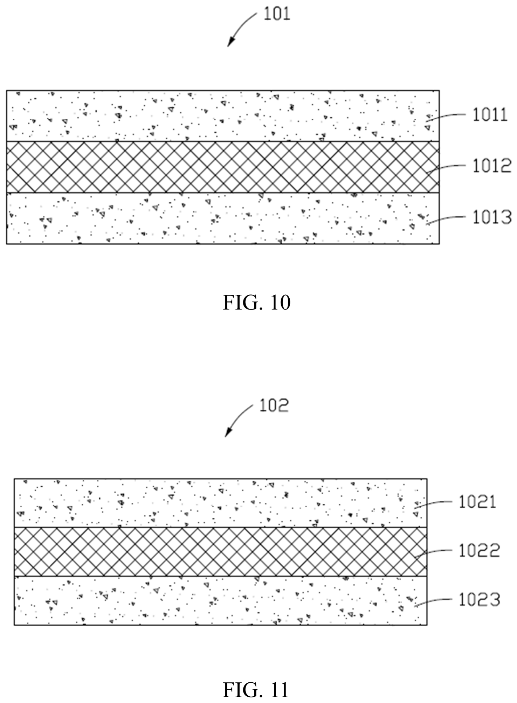

As shown in FIG. 10 and FIG. 11, in some embodiments, the materials of both the first housing 101 and the second housing 102 may be a multi-layered sheet. As shown in FIG. 10, the first housing 101 may include a first protection layer 1011, a first metal layer 1012, and a first polymer layer 1013 that are stacked in sequence. The first polymer layer 1013 is closer to the electrode assembly 20 than the first protection layer 1011. The material of the first protection layer 1011 may be made of polymer resin, and may be configured to protect the first metal layer 1012, reduce the probability of damage to the first metal layer 1012 caused by an external force, defer air permeation from an external environment, and maintain a normal operation environment inside the secondary battery 100. In some embodiments, the material of the first protection layer 1011 may be at least one selected from ethylene terephthalate, polybutylene terephthalate, polyvinylidene fluoride, polytetrafluoroethylene, polypropylene, polyamide, or polyimide. The first metal layer 1012 may be configured to defer moisture penetration from the external environment, and reduce the damage to the electrode assembly 20 caused by the external force. In some embodiments, the first metal layer 1012 may be an aluminum foil layer or a steel foil layer. The first polymer layer 1013 is fusible by heating, and suitable for sealing, and can reduce the probability that the multi-layer sheet is dissolved or swollen by the organic solvent in the electrolyte solution. The first polymer layer 1013 can also be configured to reduce the probability that the metal layer is corroded due to the contact between an electrolyte in the electrolyte solution and the first metal layer 1012. In some embodiments, the first polymer layer 1013 includes a polymer material. The polymer material may be at least one selected from polypropylene, a propylene copolymer, polyethylene, or polymethyl methacrylate. As shown in FIG. 11, the second housing 102 may include a second protection layer 1021, a second metal layer 1022, and a second polymer layer 1023 that are stacked in sequence. Understandably, when the first housing 101 and the second housing 102 may be obtained by folding a single packaging film, the materials of the second protection layer 1021, the second metal layer 1022, and the second polymer layer 1023 are exactly the same as the materials of the first protection layer 1011, the first metal layer 1012, and the first polymer layer 1013 respectively, details of which are omitted here. During preparation of the housing 10, a specified temperature and pressure may be applied to the first housing region 101a and the third housing region 102a simultaneously by using a seal head of a sealing device, so that the first polymer layer 1013 and the second polymer layer 1023 are fused and bonded together to form a sealing portion 12.

In other embodiments, the housing 10 may be a metal housing, such as a steel shell or an aluminum shell.

As shown in FIG. 4, When viewed in the third direction Z, the first outer electrode plate 21a includes a first region 2101 and a second region 2102 connected in the second direction Y. When viewed in the third direction Z, the first region 2101 includes a first end 2101a connected to the second region 2102 and a second end 2101b disposed opposite to the first end 2101a in the second direction Y. The first region 2101 extends from the first end 2101a so as to deviate from the second direction Y, and the second end 2101b is farther away from the second electrode plate 22 in the first direction X than the first end 2101a. In this application, an extension line S1 may be formed by extending outward along the contour of the first region 2101, and an extension line S2 of the second region 2102 may be formed along the second direction Y. An intersection of the extension lines S1 and S2 is the first end 2101a. The first end 2101a may be regarded as a dividing point between the first region 2101 and the second region 2102 when viewed in the third direction Z. The configuration of the second end 2101b being disposed opposite to the first end 2101a in the second direction Y does not necessarily mean that a line S3 connecting the first end 2101a and the second end 2101b must extend along the second direction Y. In the description of an embodiment of this application, when the second end 2101b is described as being disposed opposite to the first end 2101a in the second direction Y, it indicates that the line S3 connecting the first end 2101a and the second end 2101b may deviate from the second direction Y while ensuring that the objectives of this are achieved. When viewed from the third direction Z, the second region 2102 may include a curved part. Referring to FIG. 3 and FIG. 4, in some embodiments, in the second direction Y, the first region 2101 is farther away from the first conductive plate 30 than the second region 2102, thereby reducing the probability of contact shorting caused by entry of the first tab 51 into a space between the first region 2101 and the second electrode plate 22 adjacent to the first outer electrode plate 21a when the electrode assembly 20 moves in the housing 10 along the second direction Y (for example, when the secondary battery 100 drops or vibrates).

As shown in FIG. 3, when the first end face 110 extends from the sealing portion 12 toward the first side X1, the first region 2101 extends from the first end 2101a toward the first side X1. When viewed in the second direction Y, the first region 2101 may overlap the first end face 110. The first region 2101 of the first outer electrode plate 21a is at least partially located within the first recess R1 formed by extending the first end face 110, thereby reducing friction on the first outer electrode plate 21a when the second housing 102 is fitted onto the first housing 101, and consequently reducing the probability of deformation of the first outer electrode plate 21a due to friction. As shown in FIG. 8, when the first end face 110 includes a first part 111 extending from the sealing portion 12 toward the first side X1 and a second part 112 extending from the sealing portion 12 toward the second side X2, the first region 2101 extends from the first end 2101a toward the first side X1. When viewed in the second direction Y, the first region 2101 may overlap the first part 111, thereby also reducing friction on the first outer electrode plate 21a when the second housing 102 is fitted onto the first housing 101, and consequently reducing the probability of deformation of the first outer electrode plate 21a due to friction.

As shown in FIG. 4, the second electrode plate 22 adjacent to the first outer electrode plate 21a includes a third region 2201 and a fourth region 2202 connected in the second direction Y. When viewed in the first direction X, the first region 2101 and the third region 2201 are disposed opposite to each other, and the first region 2101 and the third region 2201 overlap. When viewed in the first direction X, the second region 2102 and the fourth region 2202 are disposed opposite to each other, and the second region 2102 and the fourth region 2202 overlap. Therefore, during charging of the secondary battery 100, lithium ions precipitated from the first region 2101 can be intercalated into the third region 2201, and lithium ions precipitated from the second region 2102 can be intercalated into the fourth region 2202. In this application, a dashed line S4 parallel to the first direction X may be drawn through the first end 2101a. When viewed in the third direction Z, an intersection of the dashed line S4 and the second electrode plate 22 is a dividing line between the third region 2201 and the fourth region 2202. Because the first region 2101 of the first outer electrode plate 21a extends so as to deviate from the second direction Y, a distance between the first region 2101 and the third region 2201 in the first direction X is greater than a distance between the second region 2102 and the fourth region 2202, thereby prolonging an ion transmission path between the first region 2101 and the third region 2201. The distance between the first region 2101 and the third region 2201 is not constant. The distance between the first end 2101a of the first region 2101 and the third region 2201 is less than the distance between the second end 2101b and the third region 2201. In some embodiments, the third region 2201 includes a first subregion 2203 and a second subregion 2204 connected in the second direction Y. When viewed in the third direction Z, the second subregion 2204 includes a third end 2204a connected to the first subregion 2203 and a fourth end 2204b disposed opposite to the third end 2204a. The first subregion 2203 overlaps the first region 2101 in the first direction X. When viewed in the first direction X, the second subregion 2204 extends from the third end 2204a past the first region 2101. The second subregion 2204 is an overhang 2200 of the second electrode plate 22 adjacent to the first outer electrode plate 21a. In this application, a dashed line S5 may be drawn at the second end 2101b along the first direction X. When viewed in the third direction Z, an intersection of the dashed line S5 and the second electrode plate 22 is the third end 2204a. The third end 2204a is also a dividing point between the first subregion 2203 and the second subregion 2204 when viewed in the third direction Z.

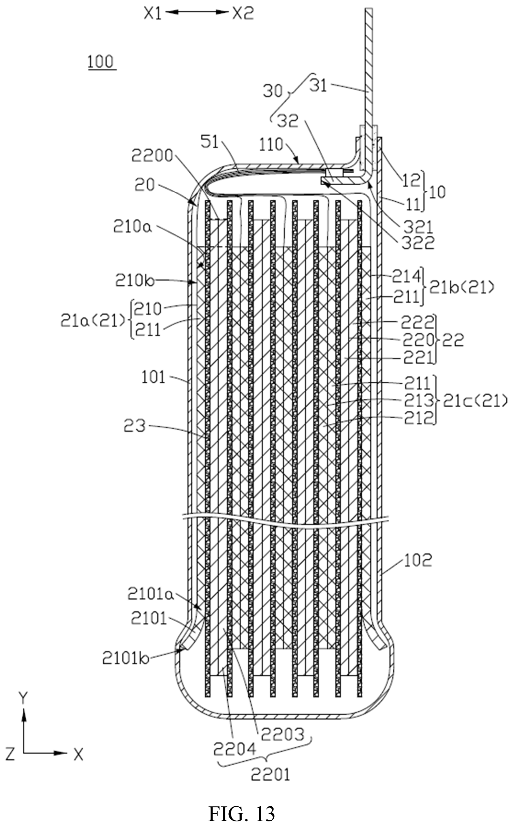

By extending the first region 2101 of the first outer electrode plate 21a outward so as to deviate from the second direction Y, this application prolongs the ion transmission path between the first region 2101 and the third region 2201 and increases a transmission impedance. When the secondary battery 100 is overcharged, the third region 2201 may serve as a sacrificial position for precipitating lithium first in the case of overcharge, thereby reducing the probability or degree of lithium plating at other positions in the second electrode plate 22 adjacent to the first outer electrode plate 21a, and also reducing the probability or degree of lithium plating at other second electrode plates 22, and reducing the occurrence of thermal runaway. Moreover, due to a relatively large distance between the first region 2101 and the third region 2201, the probability that lithium dendrites precipitated in the third region 2201 contact the first region 2101 is reduced even after the lithium dendrites pierce the separator 23, thereby reducing the probability of contact shorting between the lithium dendrites and the first outer electrode plate 21a. Furthermore, if gas is produced near the first region 2101 in the case of overcharge of the secondary battery 100, contact interfaces between the first outer electrode plate 21a, the separator 23, and the second electrode plate 22 that are adjacent can be burst open by the gas, thereby further reducing the probability of contact shorting between the lithium dendrites precipitated in the third region 2201 and the first outer electrode plate 21a, and also facilitating timely dissipation of heat in the electrode assembly 20. Therefore, this application can improve the anti-overcharge performance of the secondary battery 100, thereby improving the reliability and service life of the secondary battery 100. Referring to FIG. 13, in some embodiments, in order to further improve the anti-overcharge performance of the secondary battery 100, the second outer electrode plate 21b may be set to assume the same structure as the first outer electrode plate 21a. For example, a region extending outward so as to deviate from the second direction Y may be provided on the second outer electrode plate 21b.

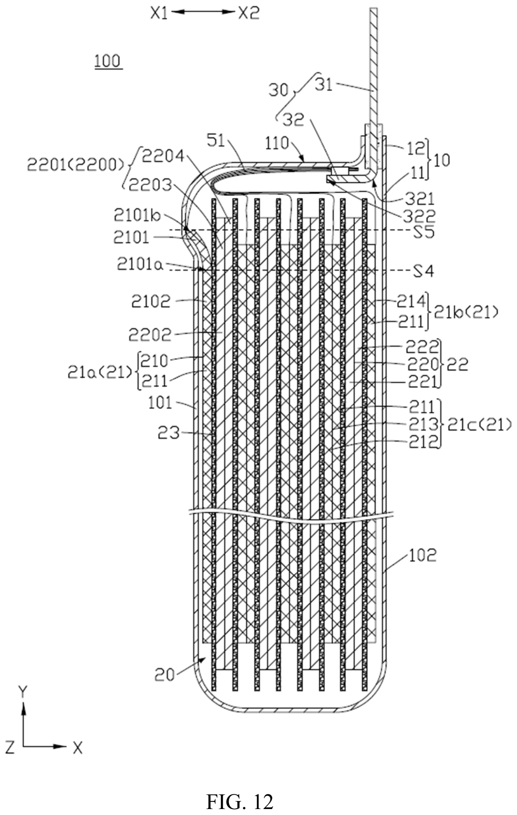

Referring to FIG. 12, in other embodiments, the first region 2101 may be set to be closer to the first conductive plate 30 than the second region 2102 in the second direction Y. Because there is a specified space between the first end face 110 and the electrode assembly 20 to accommodate the first tab 51 and a part of the first conductive plate 30, the first region 2101 being closer to the first conductive plate 30 facilitates the release of the gas generated near the first region 2101 into such space in the case of overcharge of the secondary battery 100, thereby reducing the probability that excess gas accumulates and causes the first region 2101 to further deviate from the second direction Y. This reduces the impact of a large deviation of the first region 2101 on the energy density and appearance smoothness of the secondary battery 100, also reduces the probability that the active material in the first region 2101 peels off easily and causes a short circuit, and also reduces the probability of an increase in the active material that is not capacity-boosting in the first region 2101.

In some embodiments, a mass of an active material disposed on the first current collector 210 per unit area is G (that is, the weight of the first active material layer 211 per unit area is G), satisfying: G ≤ 23 mg/cm². This reduces the probability of peel-off of the active material in the first region 2101 and also makes the first region 2101 of the first outer electrode plate 21a easily bendable (extensible so as to deviate from the second direction Y) during preparation. In addition, understandably, setting an upper limit of h₁/h₂ can reduce the probability of excessive thickness h₁, thereby making the first region 2101 of the first outer electrode plate 21a easily bendable during preparation. The steps of measuring G may be as follows: (1) discharging a secondary battery 100 at a current of 0.2C until the voltage reaches 2.75 V, disassembling the secondary battery 100, and cleaning and then drying electrode plates; (2) weighing the first outer electrode plate 21a of a specified area A by using a balance, and denoting the measured weight as G₁; (3) washing away the active material on the first current collector 210 of the first outer electrode plate 21a by using a solvent, and drying and weighing the first current collector 210, and denoting the measured weight as G₂; and (4) calculating G as: G = (G₁ - G₂)/A.

As shown in FIG. 4. in some embodiments, when viewed in the third direction Z, an angle α between a line S3 connecting the first end 2101a and the second end 2101b and the second direction Y satisfies: 1° ≤ α ≤ 12°. By defining the lower limit of the angle α, the first region 2101 can be made to deviate from the second direction Y by an amount falling within a specified range, thereby prolonging the ion transmission path between the first region 2101 and the third region 2201. In the case of overcharge of the secondary battery 100, the third region 2201 is enabled to serve as a sacrificial position for precipitating lithium first in the case of overcharge. Moreover, with the first region 2101 deviating from the second direction Y by an amount falling within a specified range, the probability of contact between the lithium dendrites precipitated in the third region 2201 and the first region 2101 is also reduced. By defining the upper limit of the angle α, this application reduces the impact on the energy density and appearance smoothness of the secondary battery 100 when the first region 2101 deviates to a large degree, reduces the probability that the active material in the first region 2101 peels off easily and causes a short circuit when the first region 2101 deviates to a large degree, and reduces the probability of an increase in the active material that is not capacity-boosting in the first region 2101 when the first region 2101 deviates to a large degree.

Further, in some embodiments, 3° ≤ α ≤ 10°. By further defining the lower limit of the angle α, this application further prolongs the ion transmission path between the first region 2101 and the third region 2201. In the case of overcharge of the secondary battery 100, the third region 2201 is enabled to serve as a sacrificial position for precipitating lithium first in the case of overcharge. Moreover, this setting further reduces the probability of contact between the lithium dendrites precipitated in the third region 2201 and the first region 2101. By further defining the upper limit of the angle α, this application further reduces the impact of the first region 2101 on the energy density and appearance smoothness of the secondary battery 100, further reduces the probability that the active material in the first region 2101 peels off easily and causes a short circuit, and further reduces the probability of an increase in the active material that is not capacity-boosting in the first region 2101.

The steps of measuring α may be as follows: (1) performing two-dimensional projection and scanning on a secondary battery 100 in the third direction Z by using an X-ray to obtain a CT image, where the test instrument may be an instrument or device well-known to a person skilled in the art (for example, a GE Phoenixvtomex S device); and (2) measuring the value of α directly by using calipers or another appropriate gauge.

Alternatively, the steps of measuring α may be as follows: (1) discharging a secondary battery 100 at a current of 0.2C until the voltage reaches 2.75 V; (2) formulating a resin composition by mixing a crystal adhesive resin matrix (such as epoxy resin), a catalyst, and a curing agent at a specified ratio; (3) pouring the resin composition into a mold, and cutting the housing 10 of the secondary battery 100, and placing the secondary battery into the mold obliquely to reduce bubbles that may remain at the bottom of the secondary battery 100, and then continuing to slowly pour the resin composition so that the secondary battery 100 is completely immersed in the resin composition, and so that the resin composition slowly flows into the housing 10 through the cut on the housing 10; (4) adjusting the position of the secondary battery 100 until a horizontal position, expelling excess bubbles, and then leaving the secondary battery 100 to stand until the resin composition coagulates; (5) cutting the secondary battery 100 along a cross-section perpendicular to the third direction Z, and polishing the cut surface to obtain a cross-section of the secondary battery 100; and (6) marking, on the cross-section, an angle α between the line S3 connecting the first end 2101a and the second end 2101b and the second direction Y, and measuring the value of α directly by using calipers or another appropriate gauge.

In some embodiments, as shown in FIG. 4, when viewed in the third direction Z, a length by which the first region 2101 extends from the first end 2101a to the second end 2101b is a first length L₁ (when the first region 2101 includes a curved part, L₁ means an arc length of the first region 2101). As shown in FIG. 3, a length of the second region 2102 in the second direction Y is a second length L₂, satisfying: 7 ≤ L₂/L₁ ≤ 29. By defining the lower limit of L₂/L₁, this application reduces the impact of the first region 2101 on the energy density and appearance smoothness of the secondary battery 100 when the above ratio is excessively small (for example, the length L₁ is excessively large, and makes the first region 2101 deviate to a large degree), and also reduces the probability of an increase in the active material that is not capacity-boosting in the first region 2101. By defining the upper limit of L₂/L₁, this application reduces the probability that the occurrence or degree of lithium plating at other positions fails to be reduced significantly in the third region 2201 in the case of overcharge when the above ratio is excessively large (for example, the length L₁ is excessively small, and the area of the first region 2101 is excessively small).

Further, in some embodiments, the ratio satisfies: 11 ≤ L₂/L₁ ≤ 19, thereby further reducing the impact of the first region 2101 on the energy density and appearance smoothness of the secondary battery 100, further reducing the probability of an increase in the active material that is not capacity-boosting in the first region 2101, and further reducing the probability that the occurrence or degree of lithium plating at other positions fails to be reduced significantly in the third region 2201 in the case of overcharge. The lengths L₁ and L₂ may be measured by performing measurement steps similar to the steps of measuring the angle α.

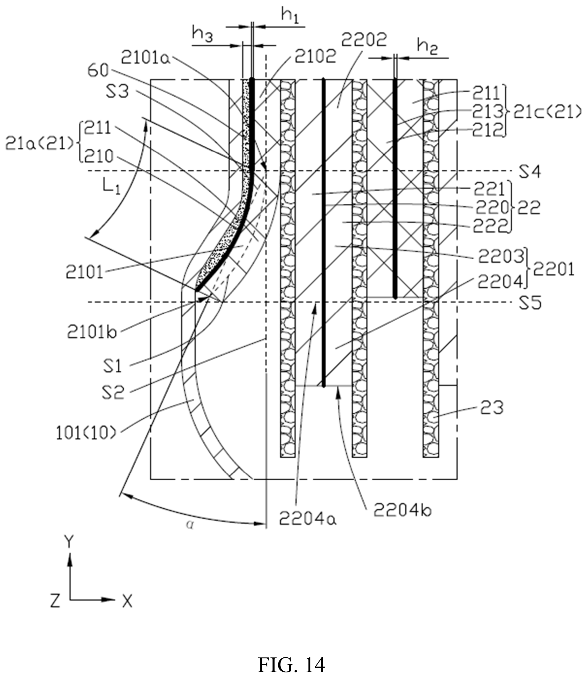

As shown in FIG. 14, in other embodiments, the secondary battery 100 may further include a first layer 60 containing an insulation material and disposed on the second surface 210b. The first layer 60 is configured to dissipate heat generated at the first outer electrode plate 21a in the case of overcharge of the secondary battery 100, thereby reducing the temperature of the electrode assembly 20 and improving the anti-overcharge performance of the secondary battery 100. When the first electrode plate 21 is a negative electrode plate and the metal layer of the housing 10 is an aluminum foil layer, the first layer 60 can also insulate the first current collector 210 from the housing 10, thereby reducing the probability that the burrs at the edge of the first current collector 210 (the burrs may be generated during cutting of the first current collector 210, but this is not limited herein) pierce the polymer layer of the housing 10 and is contact-shorted with the aluminum foil layer to cause a large amount of heat generated by the secondary battery 100. This arrangement also reduces the probability that the lithium ions deintercalated from the first outer electrode plate 21a during charging react at a contact point between the first current collector 210 and the aluminum foil layer to generate an aluminum-lithium alloy (AlLi) and cause corrosion of the aluminum foil layer. The insulation material of the first layer 60 may be at least one selected from an inorganic ceramic material or a binder. The inorganic ceramic material includes at least one of hafnium dioxide, strontium titanate, tin dioxide, cesium oxide, magnesium oxide, nickel oxide, calcium oxide, barium oxide, zinc oxide, zirconium oxide, yttrium oxide, aluminum oxide, titanium oxide, silicon dioxide, boehmite, magnesium hydroxide, or aluminum hydroxide. The binder may be at least one selected from styrene-butadiene rubber, polypropylene, polyacrylic acid, acrylate ester or a derivative thereof, polyvinyl alcohol, natural rubber, or modified rubber. Specifically, the first layer 60 may be a single-sided adhesive tape, a double-sided tape, or a hot-melt adhesive. The first layer 60 may be bonded to the second surface 210b and cover the entire second surface 210b. In other embodiments, the first layer 60 may be distributed on the second surface 210b in the form of dots, strips, or other irregular shapes.

In some embodiments, in the first direction X, it is defined that the thickness of the first current collector 210 is a first thickness h₁, and the thickness of the first layer 60 is a third thickness h₃, satisfying: h₃<2h₁. This reduces the impact of the first layer 60 on the energy density of the secondary battery 100 when the thickness h₃ is excessively large, and also reduces the probability that the heat dissipation effect of the first layer 60 is reduced and the first layer is prone to be pierced by edge burrs of the first current collector 210 when the thickness h₃ is excessively small.

In some embodiments, the first layer 60 may specifically be a double-sided tape or a hot-melt adhesive, and is configured to bond the second surface 210b and the housing 10. Therefore, the first layer 60 can also transfer the heat, which is generated at the first outer electrode plate 21a in the case of overcharge of the secondary battery 100, onto the housing 10, allow such heat to be dissipated to the outside through the housing 10, and improve the heat dissipation effect, thereby further improving the anti-overcharge performance of the secondary battery 100.

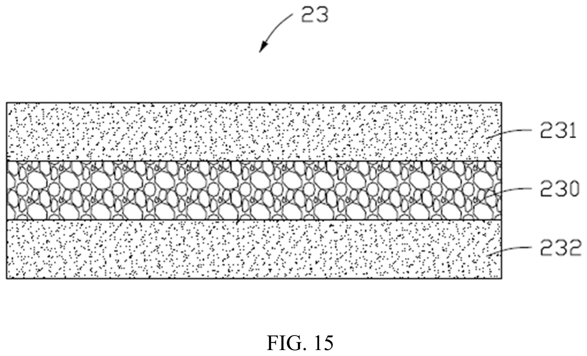

As shown in FIG. 4 or FIG. 14, in some embodiments, the separator 23 adjacent to the first outer electrode plate 21a is bonded to the second region 2102, thereby further reducing the probability of contact shorting between the first outer electrode plate 21a and the adjacent second electrode plate 22. Referring to FIG. 15, in some specific embodiments, the separator 23 may include a first adhesive layer 231, a substrate 230, and a second adhesive layer 232 that are stacked in the first direction X. The first adhesive layer 231, the substrate 230, and the second adhesive layer 232 are all a porous structure. The separator 23 is bonded to the second region 2102 by the first adhesive layer 231. The base layer 230 may be at least one selected from polyethylene, polypropylene, polyvinylidene fluoride, polyethylene terephthalate, polyimide, or aramid fiber. The first adhesive layer 231 and the second adhesive layer 232 each include a binder. The binder includes a homopolymer or a copolymer formed of polymer monomers. The polymer monomers include at least one of vinylidene fluoride, hexafluoropropylene, acrylic acid, acrylate ester, butadiene, styrene, acrylonitrile, ethylene, chlorostyrene, fluorostyrene, or propylene.

In some embodiments, the separator 23 adjacent to the first outer electrode plate 21a may be bonded to the third region 2201. For example, the separator 23 adjacent to the first outer electrode plate 21a is bonded to the third region 2201 by the second adhesive layer 232, thereby further reducing the probability of contact shorting between the first outer electrode plate 21a and the adjacent second electrode plate 22. Understandably, if gas is produced near the first region 2101 in the case of overcharge of the secondary battery 100, because the separator 23 is a porous structure, the gas can pass through the separator 23 and burst open the contact interfaces between the first outer electrode plate 21a, the separator 23, and the second electrode plate 22 that are adjacent, thereby reducing the probability of contact shorting between the lithium dendrites precipitated in the third region 2201 and the first outer electrode plate 21a, and also facilitating timely dissipation of the heat in the electrode assembly 20.

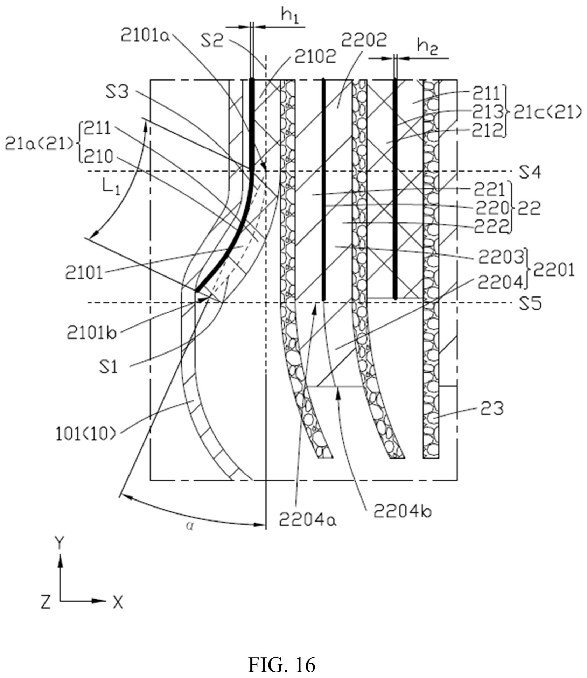

Referring to FIG. 16, in other embodiments, when viewed in the third direction Z, the second subregion 2204 extends from the third end 2204a along a direction facing away from the first outer electrode plate 21a. The extension direction of the second subregion 2204 is inclined relative to the second direction Y. By extending the second subregion 2204 from the third end 2204a along a direction facing away from the first outer electrode plate 21a, this application also prolongs the ion transmission path between the third region 2201 and the first region 2101, thereby reducing the degree of deviation of the first region 2101, and consequently reducing the impact on the energy density and appearance smoothness of the secondary battery 100 when the first region 2101 deviates to a large degree, reduces the probability that the active material in the first region 2101 peels off easily and causes a short circuit when the first region 2101 deviates to a large degree, and also reduces the probability of an increase in the active material that is not capacity-boosting in the first region 2101 when the first region 2101 deviates to a large degree.

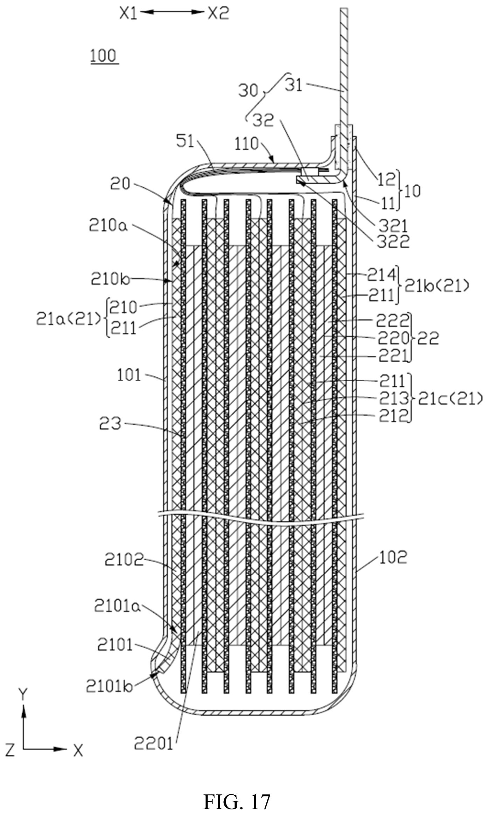

Referring to FIG. 17, in other embodiments, the first electrode plate 21 may be set to be a negative electrode plate, and the second electrode plate 22 may be set to be a positive electrode plate. In this case, because the ion transmission path between the first region 2101 and the third region 2201 is prolonged, when the secondary battery 100 is overcharged, the first region 2101 can serve as a sacrificial position for precipitating lithium first in the case of overcharge, thereby reducing the probability or degree of lithium plating at other positions in the first outer electrode plate 21a, and also reducing the probability or degree of lithium plating at other first electrode plates 21 other than the first outer electrode plate 21a. Moreover, due to a relatively large distance between the first region 2101 and the third region 2201, the probability that lithium dendrites precipitated in the first region 2101 contact the third region 2201 is reduced even after the lithium dendrites pierce the separator 23, thereby reducing the probability of contact shorting between the lithium dendrites and the third region 2201.

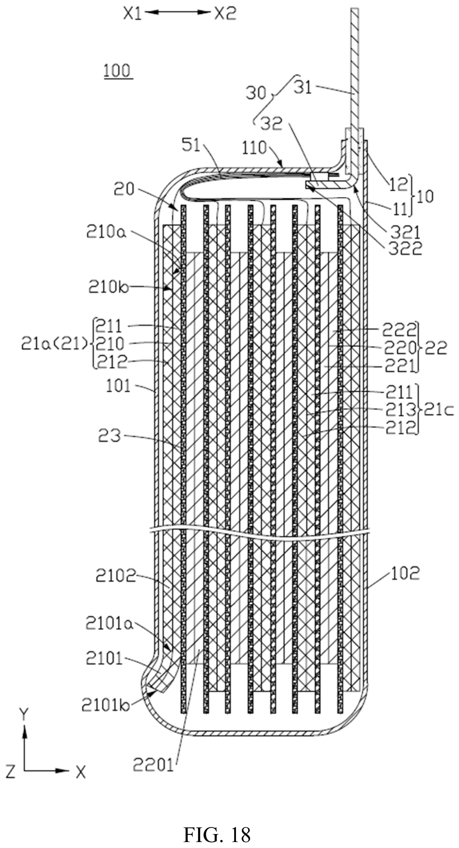

Referring to FIG. 18, in other embodiments, the first outer electrode plate 21a may be a double-side coated electrode plate instead. The first outer electrode plate 21a includes a first active material layer 211, a first current collector 210, and a second active material layer 212 stacked in the first direction X. The first current collector 210 includes a first surface 210a facing the second electrode plate 22 and a second surface 210b opposite to the first surface 210a. The first active material layer 211 is disposed on the first surface 210a, and the second active material layer 212 is disposed on the second surface 210b. In this case, the mass of the active material on the first current collector 210 per unit area is G and satisfies G ≤ 23 mg/cm², which specifically means that the total mass of the first active material layer 211 and the second active material layer 212 disposed on the first current collector 210 per unit area is less than 23 mg/cm².

The secondary battery 100 of this application may be a lithium secondary battery, including a lithium metal secondary battery, a lithium-ion secondary battery, a lithium polymer secondary battery, or a lithium-ion polymer secondary battery.

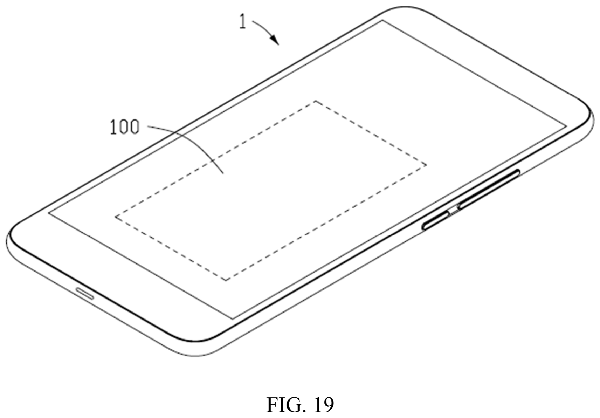

Referring to FIG. 19, an embodiment of this application provides an electronic device 1. The electronic device includes the secondary battery 100. The electronic device 1 is powered by the secondary battery 100, and the secondary battery 100 exhibits relatively high anti-overcharge performance. In an embodiment, the electronic device 1 according to this application may be, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

The following describes this application in detail with reference to specific embodiments and comparative embodiments. This application is described with reference to specific test methods by using an example in which the secondary battery 100 is a pouch-type lithium-ion secondary battery. A person skilled in the art understands that the preparation methods described in this application are merely exemplary, and any other appropriate preparation methods still fall within the scope of this application.

### Embodiments 1 to 14

Preparing a first electrode plate 21: Mixing lithium cobalt oxide (LiCoO₂) as an active material, conductive carbon black (Super P), and polyvinylidene fluoride (PVDF) at a mass ratio of 97.5 : 1.0 : 1.5, and adding N-methyl pyrrolidone (NMP) as a solvent to formulate a slurry in which the solid content is 75 wt%, and stirring well. Applying the slurry evenly onto one surface of 12 µm-thick aluminum foil, and reserving a blank foil region at the edge of the aluminum foil. Drying the slurry at a temperature of 90 °C to obtain a 100 µm-thick active material layer. This single-side coated first electrode plate 21 will serve as a first outer electrode plate 21a and a second outer electrode plate 21b separately. Repeating the above steps on the other surface of the aluminum foil to prepare another first electrode plate 21 coated with the active material layer on both sides. Subsequently, cutting away the excess blank foil region by performing laser die-cutting, so as to obtain a first tab 51.

Preparing a second electrode plate 22: Mixing artificial graphite as a negative active material, conductive carbon black (Super P), and the styrene butadiene rubber (SBR) at a mass ratio of 96 : 1.5 : 2.5, and adding deionized water as a solvent to formulate a slurry in which the solid content is 70 wt%, and stirring well. Applying the slurry evenly onto one surface of 10 µm-thick copper foil, and reserving a blank foil region at the edge of the copper foil. Drying the slurry at 110 °C to obtain a 150 µm-thick active material layer. Repeating the above steps on the other surface of the foil. Subsequently, cutting away the excess blank foil region by performing laser die-cutting, so as to obtain a second tab 52.

Preparing an electrolyte solution: Mixing ethylene carbonate (EC) and diethyl carbonate (DEC) at a mass ratio of 1: 1 in a dry argon atmosphere to form an organic solvent, and then adding 5 wt% fluoroethylene carbonate (FEC), 5 wt% 1,3-propane sultone (PS), and a lithium salt lithium hexafluorophosphate (LiPF₆) into the organic solvent to dissolve, and stirring well to obtain an electrolyte solution in which the lithium salt concentration is 1 mol/L.

Preparing an electrode assembly 20: Stacking the first electrode plate 21, the separator 23, and the second electrode plate 22 other than the first outer electrode plate 21a in sequence. Using a 15 µm-thick polyethylene (PE) film as a separator 23. Hot-pressing the stacked structure at a temperature of 60 °C and a pressure of 1 MPa for 10 seconds by using a flat plate. Subsequently, stacking the first outer electrode plate 21a and the second outer electrode plate 21b onto two opposite sides of the above structure respectively. Heating, at a position that needs to be bent, the first outer electrode plate 21a at a temperature of 150 °C for 60 seconds by using an arcuate roller so that the first region 2101 bends outward so as to deviate from the second direction Y. The bend-related parameters are recorded in Table 1 and Table 2. The angle α, L₂/L₁, and other values can be controlled by adjusting the temperature and the heating time of the arcuate roller. Hot-pressing the second region 2102 of the first outer electrode plate 21a at a temperature of 60 °C and a pressure of 1 MPa for 10 seconds by using a flat plate, so as to bond the second region 2102 to the separator 23. Hot-pressing the second outer electrode plate 21b by performing similar steps.

Assembling a secondary battery 100: Welding a first tab 51 and a second tab 52 to the first conductive plate 30 and a second conductive plate 40 respectively by means of transition joint welding. The first conductive plate 30 is made of aluminum, and the second conductive plate 40 is made of nickel. Placing a 150 µm-thick aluminum laminated film, which is provided with a cavity by stamping, into an assembly fixture, with the cavity side facing upward. Placing the electrode assembly 20 into the cavity. Injecting an electrolyte solution into the cavity of the aluminum laminated film. Leading the first conductive plate 30 and the second conductive plate 40 out of the aluminum laminated film. Applying pressure to the edge of the aluminum laminated film by using a special-shaped seal head, so as to form a sealing portion 12, and then performing electrolyte injection, chemical formation, and sealing to finish making a battery.

### Comparative Embodiment

Different from Embodiment 1 in that the outermost-layer first electrode plate 21 is not bent outward.

Performing an overcharge test and an energy density test on 20 batteries taken from each embodiment and each comparative embodiment.

The steps of the overcharge test include: 1) charging a battery at a constant current of 0.5C at 25 °C until the voltage reaches 4.48 V, and then charging the battery at a constant voltage until the current tapers off to 0.05C; 2) wrapping the battery with 10 mm-thick white foam (the foam needs to cover the entire surface of the battery), placing the battery into an overcharge-and-overdischarge tester (manufacturer: Arbin, model: BT-ML-30V15A), and then charging the battery at a constant current of 1C until a voltage of 18.5 V, and then charging the battery at a constant voltage for 2 hours; 3) monitoring the change in the parameters such as open-circuit voltage and temperature of the battery during overcharge, measuring the weight of the battery after the overcharge, and observing whether the battery smokes or catches fire. Determining that the battery passes the test if the battery does not smoke or catch fire. Subsequently, counting the number of batteries that have passed the test, and recording the results in Table 1.

The steps of testing the energy density includes: 1) charging a battery at a constant current of 0.5C in a 25 °C environment until the voltage reaches 4.4 V, and then charging the battery at a constant voltage of 4.4 V until the current tapers off to 0.025C; leaving the battery to stand for 5 minutes, and then discharging the battery at a discharge rate of 0.1C until the voltage drops to 3.0 V; and leaving the battery to stand for 5 minutes, and measuring the 0.1C discharge capacity, denoted as C. Measuring the length (L), width (W), and thickness (H) of the battery after completion of the charging and discharging steps. Calculating the energy density of the battery as: energy density = C/(L × W × H). The test results are recorded in Table 2.

**Table 1**

| | α (°) | Overcharge test pass rate |
|---|---|---|
| Comparative Embodiment | 0 | 0/20 |
| Embodiment 1 | 5 | 18/20 |

| | | |
|---|---|---|
| Note: The overcharge test pass rate X/20 means that the number of samples that pass the test among the 20 tested samples is X. | | |

As can be seen from the data in Table 1, in contrast to the comparative embodiment, in Embodiment 1, the first region 2101 of the first outer electrode plate 21a is set to bend outward so as to deviate from the second direction Y, thereby improving the overcharge test pass rate.

**Table 2**

| | α (o) | L₂/L₁ | Overcharge test pass rate | Energy density (Wh/L) |
|---|---|---|---|---|
| Embodiment 1 | 5 | 15 | 18/20 | 629 |
| Embodiment 2 | 0.5 | 15 | 6/20 | 655 |
| Embodiment 3 | 1 | 15 | 11/20 | 650 |
| Embodiment 4 | 3 | 15 | 15/20 | 637 |
| Embodiment 5 | 7 | 15 | 19/20 | 620 |
| Embodiment 6 | 10 | 15 | 19/20 | 613 |
| Embodiment 7 | 12 | 15 | 20/20 | 602 |
| Embodiment 8 | 13 | 15 | 20/20 | 578 |
| Embodiment 9 | 3 | 6 | 20/20 | 582 |
| Embodiment 10 | 3 | 7 | 20/20 | 601 |
| Embodiment 11 | 3 | 11 | 19/20 | 623 |
| Embodiment 12 | 3 | 19 | 18/20 | 642 |
| Embodiment 13 | 3 | 29 | 15/20 | 654 |
| Embodiment 14 | 3 | 30 | 9/20 | 660 |

As can be seen from the data in Table 2, among Embodiments 1 to 8, Embodiment 1 and Embodiments 4 to 6 satisfy 3° ≤ α ≤ 10°, thereby exhibiting a relatively high level in both overcharge test pass rate and energy density. In Embodiment 2, the angle α is relatively small, and therefore, lithium is not precipitated in the third region 2201 first in the case of overcharge of the secondary battery 100, and the probability of contact between the lithium dendrites precipitated in the third region 2201 and the first region 2101 is increased, thereby reducing the overcharge test pass rate. In Embodiments 7 to 8, the angle α is relatively large, and therefore, the energy density is reduced.

Among Embodiment 4 and Embodiments 9 to 14, Embodiment 4 and Embodiments 10 to 13 satisfy 7 ≤ L₂/L₁ ≤ 29, thereby exhibiting a relatively high level in both overcharge test pass rate and energy density. In Embodiment 14, the L₂/L₁ ratio is relatively high, and therefore, lithium is not precipitated in the third region 2201 first in the case of overcharge of the secondary battery 100, thereby reducing the overcharge test pass rate. In Embodiment 9, the L₂/L₁ ratio is relatively low, and therefore, the energy density is reduced.

Disclosed above are merely preferred embodiments of this application that are in no way construed as any limitation on this application. Therefore, any equivalent variations made based on this application still fall within the scope covered by this application.

## Claims

1. A secondary battery, comprising a housing, an electrode assembly disposed in the housing, and a first conductive plate, wherein the electrode assembly is a stacked structure, and the electrode assembly comprises a first electrode plate, a separator, and a second electrode plate that are stacked sequentially in a first direction, the first conductive plate is connected to the first electrode plate, and the first conductive plate extends out of the housing along a second direction perpendicular to the first direction, **characterized in that**:
the first electrode plate comprises a first outer electrode plate, and the first outer electrode plate is an outermost layer of the electrode assembly; when viewed in a third direction perpendicular to both the first direction and the second direction, the first outer electrode plate comprises a first region and a second region connected in the second direction; and
when viewed in the third direction, the first region comprises a first end connected to the second region and a second end disposed opposite to the first end in the second direction; the first region extends from the first end so as to deviate from the second direction, and the second end is farther away from the second electrode plate in the first direction than the first end.

2. The secondary battery according to claim 1, **characterized in that**, when viewed in the third direction, an angle α between a line connecting the first end and the second end and the second direction satisfies: 1° ≤ α ≤ 12°.

3. The secondary battery according to claim 2, **characterized in that** 3° ≤ α ≤ 10°.

4. The secondary battery according to claim 1, **characterized in that**, when viewed in the third direction, a length of extension of the first region extending from the first end to the second end is a first length, a length of the second region in the second direction is a second length, and a ratio of the second length to the first length is greater than or equal to 7 and less than or equal to 29.

5. The secondary battery according to claim 4, **characterized in that** a ratio of the second length to the first length is greater than or equal to 11 and less than or equal to 19.

6. The secondary battery according to claim 1, **characterized in that**, in the second direction, the first region is farther away from the first conductive plate than the second region.

7. The secondary battery according to claim 1, **characterized in that** in the second direction, the first region is closer to the first conductive plate than the second region.

8. The secondary battery according to claim 1, **characterized in that** the first direction comprises a first side oriented from the second electrode plate toward the first outer electrode plate; the housing is a packaging bag and comprises a main portion for accommodating the electrode assembly and a sealing portion connected to the main portion, and the first conductive plate extends out of the housing from the sealing portion; the main portion comprises a first end face connected to the sealing portion, and when viewed in the third direction, the first end face extends from the sealing portion to the first side; and when viewed in the third direction, the first region extends from the first end to the first side.

9. The secondary battery according to claim 1, **characterized in that** the first direction comprises a first side oriented from the second electrode plate toward the first outer electrode plate and a second side opposite to the first side; the housing is a packaging bag and comprises a main portion for accommodating the electrode assembly and a sealing portion connected to the main portion, and the first conductive plate extends out of the housing from the sealing portion; the main portion comprises a first end face connected to the sealing portion, and when viewed in the third direction, the first end face comprises a first part extending from the sealing portion to the first side and a second part extending from the sealing portion to the second side, and a length of the first part in the first direction is greater than a length of the second part in the first direction; and when viewed in the third direction, the first region extends from the first end to the first side.

10. The secondary battery according to claim 1, **characterized in that** the first direction comprises a first side oriented from the second electrode plate toward the first outer electrode plate; the housing is a packaging bag and comprises a main portion for accommodating the electrode assembly and a sealing portion connected to the main portion; the first conductive plate comprises a first conductive region and a second conductive region connected to each other, the first conductive region is disposed inside the sealing portion and extends out of the housing from the sealing portion, the second conductive region is electrically connected to the first electrode plate, the second conductive region comprises a first end portion connected to the first conductive region, and the second conductive region extends from the first end portion to the first side.

11. The secondary battery according to claim 1, **characterized in that** the first outer electrode plate comprises a first current collector and a first active material layer stacked in the first direction, the first current collector comprises a first surface facing the second electrode plate and a second surface opposite to the first surface, the first active material layer is disposed on the first surface, and the second surface is coated with no active material.

12. The secondary battery according to claim 11, **characterized in that** the first electrode plate further comprises a first inner electrode plate, the first inner electrode plate is located on an inner side of the first outer electrode plate, the first inner electrode plate comprises a second current collector, and in the first direction, a thickness of the first current collector is a first thickness, a thickness of the second current collector is a second thickness, and a ratio of the first thickness to the second thickness is greater than or equal to 1.2 and less than or equal to 2.5.

13. The secondary battery according to claim 11, **characterized in that** the secondary battery further comprises a first layer disposed on the second surface, and the first layer contains an insulation material.

14. The secondary battery according to claim 13, **characterized in that**, in the first direction, it is defined that a thickness of the first current collector is a first thickness and a thickness of the first layer is a third thickness, and the third thickness is less than twice the first thickness.

15. The secondary battery according to claim 13, **characterized in that** the first layer is bonded to the second surface and the housing.

16. The secondary battery according to claim 1, **characterized in that** the first outer electrode plate comprises a first active material layer, a first current collector, and a second active material layer stacked in the first direction, the first current collector comprises a first surface facing the second electrode plate and a second surface opposite to the first surface, the first active material layer is disposed on the first surface, and the second active material layer is disposed on the second surface.

17. The secondary battery according to claim 11 or 16, **characterized in that** the first electrode plate is a positive electrode plate, and a mass of an active material disposed on the first current collector per unit area is G, satisfying: G ≤ 23 mg/cm².

18. The secondary battery according to claim 1, **characterized in that** a separator adjacent to the first outer electrode plate is bonded to the second region.

19. The secondary battery according to claim 18, **characterized in that** a second electrode plate adjacent to the first outer electrode plate comprises a third region and a fourth region connected in the second direction, and when viewed in the first direction, the first region and the third region overlap, and the second region and the fourth region overlap; and the separator adjacent to the first outer electrode plate is further bonded to the third region.

20. The secondary battery according to claim 19, **characterized in that** the third region comprises a first subregion and a second subregion connected in the second direction, and when viewed in the third direction, the second subregion comprises a third end connected to the first subregion; the first subregion overlaps the first region in the first direction, and when viewed in the first direction, the second subregion extends from the third end past the first region; and when viewed in the third direction, the second subregion extends from the third end along a direction facing away from the first outer electrode plate.

21. The secondary battery according to claim 1, **characterized in that**, when viewed in the second direction, the separator comprises a plurality of main sections stacked in the first direction and a plurality of connecting sections that connect ends of two adjacent main sections, and each of the main sections is disposed between the first electrode plate and the second electrode plate that are adjacent to each other.

22. An electronic device, **characterized in that** the electronic device comprises the secondary battery according to any one of claims 1 to 21.
